# EUROPÄISCHE PATENTSCHRIFT

(11) **EP 0 540 131 B1**
(45) Veröffentlichungstag und Bekanntmachung des Hinweises auf die Patenterteilung: **13.12.1995**
(21) Anmeldenummer: 92250228.1
(22) Anmeldetag: 26.08.1992
(51) Int. Cl.: H02G 5/06, H02B 13/035

(54) **Elektrische Schaltanlage**
Electrical switchgear
Installation de commutation électrique

(30) Priorität: 30.10.1991 DE 9113633 U
(43) Veröffentlichungstag der Anmeldung: 05.05.1993
(73) Patentinhaber: SIEMENS AKTIENGESELLSCHAFT, 80333 München (DE)
(72) Erfinder: Kelch, Thomas, W-1000 Berlin 28 (DE); Meinherz, Manfred, W-1000 Berlin 28 (DE)

(56) Entgegenhaltungen:
- EP-A- 0 003 031
- EP-A- 0 236 885
- CH-A- 299 494
- DE-A- 2 036 270
- DE-U- 9 113 633
- FR-A- 2 232 112
- FR-A- 2 656 473
- PATENT ABSTRACTS OF JAPAN vol. 2, no. 64 (E-78) & JP-A-53 029 539 & JP-A-53 029 539

## Beschreibung

Die Erfindung bezieht sich auf eine elektrische Schaltanlage mit einem zylindrischen, im Querschnitt kreisrunden Kapselungsgehäuse, das drei im wesentlichen parallel zueinander verlaufende, unterschiedliche Phasen führende, im Querschnitt des Kapselungsgehäuses im größtmöglichen Abstand voneinander und von der Wand des Kapselungsgehäuses verteilte Sammelschienenleiter enthält und mit einem ersten Abzweigleiter, der von dem ersten der Sammelschienenleiter ausgehend zwischen dem zweiten und dem dritten Sammmelschienenleiter hindurchgeführt ist.

Eine solche Schaltanlage ist beispielsweise aus der schweizerischen Patentschrift Nr. 55 86 04 bekannt. Dort sind drei in einem Kapselungsgehäuse angeordnete Sammelschienenleiter offenbart, von denen einer mit einem Abzweigleiter verbunden ist, der zwischen den anderen beiden Sammelschienenleitern hindurch zur Mantelfläche des im Querschnitt runden Kapselungsgehäuses führt. Um den Abstand zwischen dem Abzweigleiter und den beiden Sammelschienenleitern möglichst groß zu machen, ist der Abzweigleiter im Bereich der Sammelschienenleiter abgeflacht.

Der hierdurch erreichte Abstand zwischen dem Abzweigleiter und den Sammelschienenleitern ist in vielen Fällen nicht ausreichend.

Aus der FRA 2 656 473 ist eine Schaltanlage mit einem zum Teil zylindrischen Kapselungsgehäuse und drei darin parallel geführten Sammelschienenleitern bekannt, sowie ein geführten Sammelschienenleitern bekannt, sowie ein Abzweig in Form eines dreipoligen Trennschalters. Im Bereich des Abzweiges ist einer der Abzweigleiter zwischen zwei Sammelschienenleitern hindurchgeführt. In diesem Bereich ist das Kapselungsgehäuse durch ein Trennschaltergehäuse zu einer nicht zylindrischen Form erweitert, so daß die Sammelschienenleiter ausgebaucht werden können, ohne einer Wand des Kapselungsgehäuses zu nahe zu kommen.

Die der Erfindung zugrunde liegende Aufgabe besteht darin, eine Schaltanlage zu schaffen, bei der die Sammelschienenleiter einerseits im zylindrischen Kapselungsgehäuse den größtmöglichen Abstand untereinander und von der Wand des Kapselungsgehäuses aufweisen und bei der andererseits im Bereich eines Abzweigs zwischen den Abzweigleitern und den Sammelschienenleitern die größtmöglichen Abstände verwirklicht sind, ohne daß der zylindrische Querschnitt des Kapselungsgehäuses im Bereich des zweiten und dritten Sammelschienenleiters erweitert ist.

Die Aufgabe wird erfindungsgemäß dadurch gelöst, daß der zweite und dritte Sammelschienenleiter im Bereich des ersten Abzweigleiters derart ausgebaucht sind, daß sie dort im Querschnitt des Kapselungsgehäuses unter Beibehaltung ihres Abstandes von der zylindrischen Wand des Kapselungsgehäuses einen maximalen Abstand zum ersten Abzweigleiter aufweisen.

Im Bereich eines Kapselungsgehäuses ohne Abzweige sind die Sammelschienenleiter üblicherweise im Querschnitt an den Eckpunkten eines gleichschenkligen Dreiecks angeordnet, wobei alle Eckpunkte von der Wand des Kapselungsgehäuses denselben Abstand haben. Dadurch ist der maximale Abstand jedes Sammelschienenleiters von den übrigen Sammelschienenleitern und von der Kapselungswand verwirklicht.

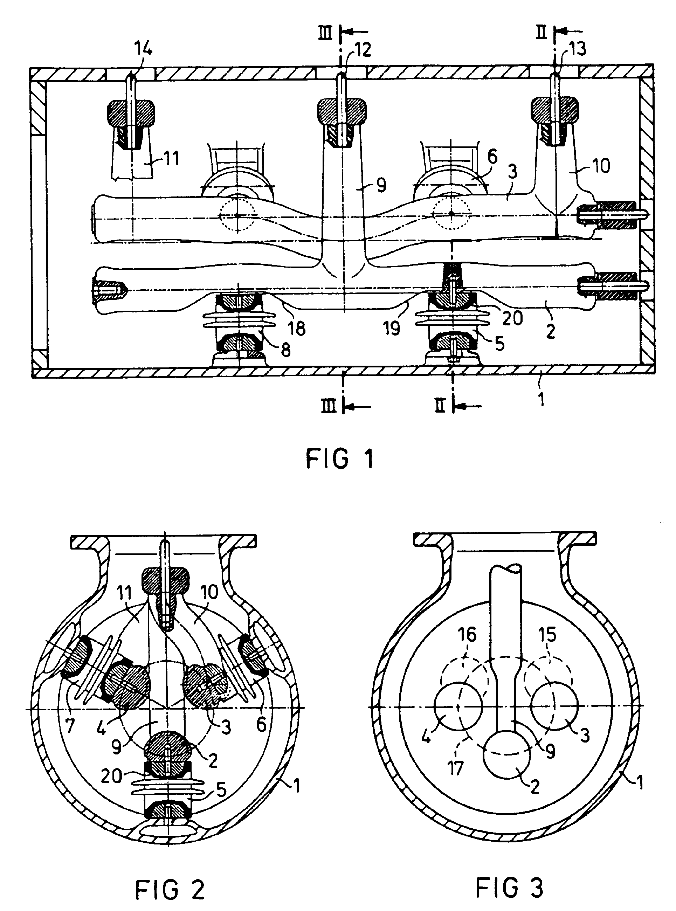

In dem Bereich, in dem ein erster Abzweigleiter, von einer ersten Sammelschiene ausgehend, zwischen den übrigen beiden Sammelschienenleitern hindurch geführt ist, ergibt sich das Problem, daß der erste Abzweigleiter den beiden Sammelschienenleitern zu nahe kommt. Die beiden Sammelschienenleiter können aber erfindungsgemäß im Bereich des ersten Abzweigleiters so ausgebaucht werden, daß sie in der Querschnittsfläche des Kapselungsgehäuses, die auch den Abzweigleiter schneidet, unter Beibehaltung ihres jeweiligen Abstandes zur Wand des Kapselungsgehäuses beide auf dem zu dem ersten Abzweigleiter senkrecht gelegenen Druchmesser eines dem Kapselungsgehäuse einbeschriebenen Kreises liegen (vgl. Figur 3).

Dadurch sind die beiden Sammelschienenleiter zwar dem ersten Sammelschienenleiter an dieser Stelle näher als im übrigen Teil der Schaltanlage, dieses ist jedoch im Hinblick auf die dielektrischen Bedingungen vertretbar und wird durch den Vorteil des vergrößerten Abstandes zwischen dem ersten und zweiten Sammelschienenleiter einerseits und dem ersten Abzweigleiter andererseits aufgewogen.

Die Erfindung kann bei einer elektrischen Schaltanlage, bei der längs des Kapselungsgehäuses auf jeder Seite des ersten Abzweigleiters je ein weiterer, dem zweiten bzw. dritten Sammelschienenleiter zugeordneter Abzweigleiter angeordnet ist, dadurch vorteilhaft ausgestaltet werden, daß jeder der weiteren Abzweigleiter mit einem Teil des jeweiligen Sammelschienenleiters, dem er zugeordnet ist, einstückig in Form je eines Bauelementes zusammenhängt und daß die Bauelemente identisch aufgebaut und spiegelsymmetrisch zum ersten Abzweigleiter eingebaut sind.

Durch die einstückige Form der Bauelemente ist die Herstellung einfach und vor allem ist lediglich eine einzige Art von solchen Bauelementen herzustellen und auf Lager zu halten. Außerdem entfällt bei der Montage die Befestigung der Abzweigleiter an den Sammelschienenleitern, was bei der Enge des Kapselungsgehäuses eine erhebliche Erleichterung darstellt.

Eine weitere vorteilhafte Ausgestaltung der Erfindung sieht vor, daß der erste Abzweigleiter im Querschnitt derart abgeflacht ist, daß dem zweiten und dritten Sammelschienenleiter jeweils die Flächen des ersten Abzweigleiters mit der geringsten Krümmung zugewandt sind.

Durch diese Gestaltung des ersten Abzweigleiters wird das elektrische Feld zwischen diesem und den Sammelschienenleitern vergleichmäßigt, so daß die dielektrische Festigkeit erhöht wird. Außerdem ist der Abstand zwischen der Oberfläche des ersten Abzweigleiters und den Sammelschienenleitern vergößert.

Weiterhin kann die Erfindung vorteilhaft dadurch ausgestaltet werden, daß die Sammelschienenleiter an den Stellen, an denen sie von Isolierstützern gestützt sind, an der diesen zugewandten Seite abgeflacht sind.

Hierdurch ergibt sich einerseits eine bequeme Befestigungsmöglichkeit für die Sammelschienenleiter, andererseits ergibt sich für die Isolierstützer durch die Abflachung eine größere Länge. Dadurch ist eine höhere Durchschlagsfestigkeit realisiert, als in dem Fall, in dem die metallischen Befestigungselemente der Stützer von einer nicht abgeflachten Oberfläche eines Sammelschienenleiters ein Stück weit zur Kapselungswand ragen.

Eine weitere Ausgestaltung der Erfindung sieht vor, daß die Isolierstützer an ihrer dem jeweiligen Sammelschienenleiter zugewandten Seite je eine Elektrode aufweisen, die den abgeflachten Querschnitt des Sammelschienenleiters in diesem Bereich im wesentlichen zu einem Kreis vervollständigen.

Hierdurch ist eine besonders gute Vergleichmäßigung des elektrischen Feldes im Bereich der Stützer gegeben. Die metallischen Elektroden der Stützer weisen eine im Querschnitt halbrunde Form auf, die nach der Befestigung der Elektrode an einem abgeflachten Sammelschienenleiter den metallischen Querschnitt des Leiters an dieser Stelle zu einem Kreis vervollständigt.

Im folgenden wird die Erfindung anhand eines Ausführungsbeispiels in einer Zeichnung gezeigt und anschließend beschrieben. Dabei zeigt
Figur 1 einen Längsschnitt durch ein Kapselungsgehäuse im Bereich eines Abzweigs,
Figur 2 einen Querschnitt des Kapselungsgehäuses aus Figur 1, wie in Figur 1 angedeutet,
Figur 3 einen weiteren Querschnitt durch das Kapselungsgehäuse aus Figur 1, wie dort angedeutet.

Die Figur 1 zeigt in einem schematischen Längsschnitt ein Kapselungsgehäuse 1 einer elektrischen Hochspannungsschaltanlage. In dem Kapselungsgehäuse 1 sind drei Sammelschienenleiter 2, 3, 4 befestigt und durch Isolierstützer 5, 6, 7, 8 getragen.

Im Bereich des Kapselungsgehäuses 1 befindet sich eine Abzweigstelle, in deren Bereich ein erster Abzweigleiter 9, ausgehend von dem ersten Sammelschienenleiter 2 und elektrisch mit diesem verbunden zwischen dem zweiten Sammelschienenleiter 3 und dem dritten Sammelschienenleiter 4 hindurch zur Wand des Kapselungsgehäuses geführt ist.

Entlang der Längsachse der Sammelschienenleiter 2, 3, 4 sind vor und hinter dem ersten Abzweigleiter 9 zwei weitere Abzweigleiter 10, 11 angeordnet, die dem zweiten und dem dritten Sammelschienenleiter 3, 4 zugeordnet sind.

Die Abzweigleiter 9, 10, 11 sind jeweils über einen Kuppelkontakt 12, 13, 14 mit weiteren nicht dargestellten Teilen der Schaltanlage verbunden.

Der zweite und dritte Sammelschienenleiter 3, 4 sind im Bereich des ersten Abzweigleiters 9 derart ausgebaucht, das heißt derart in einer Krümmung um den ersten Abzweigleiter herumgeführt, daß sie dort den maximal möglichen Abstand vom ersten Abzweigleiter 9 unter Beibehaltung ihres Abstandes von der Wand des Kapselungsgehäuses 1 erreichen.

Dies ist schematisch in der Figur 3 näher dargestellt. Dort sind in einem Querschnitt des Kapselungsgehäuses 1 die Sammelschienenleiter 2, 3, 4 im Bereich des Abzweigleiters 9 dargestellt. Zum Vergleich dazu sind gestrichelt mit den Bezugszeichen 15, 16 die Positionen des zweiten und dritten Sammelschienenleiters in einem Querschnitt außerhalb des Bereiches des Abzweigleiters 9 dargestellt. Außerhalb dieses Bereiches sind die drei Sammelschienenleiter 2, 3, 4 an den Eckpunkten eines gleichschenkligen Dreiecks, also in der größtmöglichen Entfernung voneinander angeordnet. Dabei liegen die Mittelachsen der Sammelschienenleiter auf dem in der Figur 3 gestrichelt angedeuteten Kreis 17. Dadurch ist gewährleistet, daß alle Sammelschienenleiter denselben Abstand von der Wand des Kapselungsgehäuses 1 aufweisen, der dem aus dielektrischen Erwägungen minimal möglichen Abstand entspricht.

Im Bereich des ersten Abzweigleiters 9 zeigt der Querschnitt in der Figur 3, daß der zweite und dritte Sammelschienenleiter 3, 4 derart gekrümmt sind, daß ihre Mittelachsen zwar noch auf dem Kreis 17 liegen, jedoch einen größeren Abstand von dem ersten Abzweigleiter 9 aufweisen, als außerhalb des Bereiches des ersten Abzweigleiters 9. Die Längsachsen der Sammelschienenleiter 3, 4 sind auf einem Durchmesser des Kapselungsgehäuses 1 angeordnet, der senkrecht zum ersten Abzweigleiter 9 verläuft.

Außerdem ist der erste Abzweigleiter 9 im Bereich zwischen dem zweiten und dritten Sammelschienenleiter 3, 4 so abgeflacht, daß er diesen Sammelschienenleitern seine Flächen mit der geringsten Krümmung zuwendet.

Der zweite und dritte Sammelschienenleiter 3, 4 sind jeweils einstückig mit dem ihnen zugeordneten weiteren Abzweigleiter verbunden. Die hierdurch entstehenden einstückigen Bauelemente sind identisch geformt und lediglich spiegelsymmetrisch zum ersten Abzweigleiter 9 in das Kapselungsgehäuse 1 der Schaltanlage eingesetzt.

Die Isolierstützer 5, 6, 7, 8 sind mittels Schrauben einerseits mit der Wand des Kapselungsgehäuses 1, andererseits mit je einem der Sammelschienenleiter 2, 3, 4 verbunden. Die Sammelschienenleiter weisen jeweils im Bereich eines Isolierstützers eine Ausnehmung 18, 19 auf, die eine platzsparende Unterbringung des jeweiligen Isolierstützers 5, 6, 7, 8 erlaubt, wobei gleichzeitig eine genügende Baulänge der Isolierstützer 5, 6, 7, 8 erhalten bleibt. Jeder der Isolierstützer 5, 6, 7, 8 weist an seinen Stirnseiten im Bereich des Befestigungsschrauben je eine metallische Elektrode 20 auf, die sich in eine Ausnehmung 18, 19 des jeweiligen Sammelschienenleiters derart einfügt, daß das elektrische Feld vergleichmäßigt wird und somit eine genügende dielektrische Festigkeit in diesem Bereich gegeben ist.

## Patentansprüche

1. Elektrische Schaltanlage mit einem zylindrischen, im Querschnitt kreisrunden Kapselungsgehäuse (1), das drei im wesentlichen parallel zueinander verlaufende, unterschiedliche Phasen führende, im Querschnitt des Kapselungsgehäuses (1) im größtmöglichen Abstand voneinander und von der Wand des Kapselungsgehäuses (1) verteilte Sammelschienenleiter (2,3,4) enthält und mit einem ersten Abzweigleiter (9), der von dem ersten der Sammelschienenleiter (2) ausgehend zwischen dem zweiten und dem dritten Sammelschienenleiter (3,4) hindurchgeführt ist,
**dadurch gekennzeichnet,**
daß der zweite und dritte Sammelschienenleiter (3, 4) im Bereich des ersten Abzweigleiters (9) derart ausgebaucht sind, daß sie dort im Querschnitt des Kapselungsgehäuses (1) unter Beibehaltung ihres Abstandes von der zylindrischen Wand des Kapselungsgehäuses (1) einen maximalen Abstand zum ersten Abzweigleiter (9) aufweisen.

2. Elektrische Schaltanlage nach Anspruch 1, bei der längs des Kapselungsgehäuses auf jeder Seite des ersten Abzweigleiters je ein weiterer, dem zweiten bzw. dritten Sammelschienenleiter zugeordneter Abzweigleiter angeordnet ist,
**dadurch gekennzeichnet,**
daß jeder der weiteren Abzweigleiter (10, 11) mit einem Teil des jeweiligen Sammelschienenleiters (3, 4), dem er zugeordnet ist, einstückig in Form je eines Bauelementes zusammenhängt und daß die Bauelemente identisch aufgebaut und spiegelsymmetrisch bezüglich des ersten Abzweigleiters (9) eingebaut sind.

3. Elektrische Schaltanlage nach Anspruch 1 oder 2,
**dadurch gekennzeichnet,**
daß der erste Abzweigleiter (9) im Querschnitt derart abgeflacht ist, daß dem zweiten und dritten Sammelschienenleiter (3, 4) jeweils die Flächen des ersten Abzweigleiters (9) mit der geringsten Krümmung zugewandt sind.

4. Elektrische Schaltanlage nach Anspruch 1 oder einem der folgenden,
**dadurch gekennzeichnet,**
daß die Sammelschienenleiter (2, 3, 4) an den Stellen, an denen sie von Isolierstützern (5, 6, 7, 8) gestützt sind, an der diesen zugewandten Seite abgeflacht sind.

5. Elektrische Schaltanlagen nach Anspruch 4,
**dadurch gekennzeichnet,**
daß die Isolierstützer (5, 6, 7, 8) an ihrer dem jeweiligen Sammelschienenleiter (2, 3, 4) zugewandten Seite je eine Elektrode (20) aufweisen, die den abgeflachten Querschnitt des Sammelschienenleiters (2, 3, 4) in diesem Bereich im wesentlichen zu einem Kreis vervollständigt.

## Claims

1. Electrical switchgear with a cylindrical casing (1) which is circular in cross section and contains three bus-bar conductors (2, 3, 4), which extend substantially parallel to one another, conduct different phases, are arranged within the cross section of the casing (1) at the greatest possible distance from one another and from the wall of the casing (1), and with a first branch conductor (9), which, extending from the first of the bus-bar conductors (2), is guided between the second and third bus-bar conductors (3, 4), characterised in that the second and third bus-bar conductors (3, 4) bulge in the region of the first branch conductor (9) in such a manner that they are arranged within the cross section of the casing (1) at a maximum distance from the first branch conductor (9), whilst maintaining their distance from the cylindrical wall of the casing (1).

2. Electrical switchgear according to claim 1, in which a further branch conductor associated with the second and third bus-bar conductors respectively is arranged along the casing on either side of the first branch conductor, characterised in that each of the further branch conductors (10, 11) is integrally formed with a part of the respective bus-bar conductor (3, 4) with which it is associated to form a component in each case, and the components are identically formed and fitted in mirror-symmetrical fashion relative to the first branch conductor (9).

3. Electrical switchgear according to claim 1 or 2, characterised in that the first branch conductor (9) is flattened in its cross section in such a manner that the surfaces of the first branch conductor (9) having the smallest degree of curvature face the second and third bus-bar conductors (3, 4).

4. Electrical switchgear according to claim 1 or one of the following, characterised in that, at the points where they are supported by insulating supports (5, 6, 7, 8), the bus-bar conductors (2, 3, 4) are flattened on the side facing said supports.

5. Electrical switchgear according to claim 4, characterised in that, on their side facing the respective bus-bar conductor (2, 3, 4), the insulating supports (5, 6, 7, 8) each comprise an electrode (20), which essentially complements the flattened cross section of the bus-bar conductor (2, 3, 4) in this region to form a circle.

## Revendications

1. Installation de commutation électrique comportant un boîtier formant capot cylindrique (1) possédant une section transversale circulaire et qui contient trois conducteurs formant barres omnibus (2,3,4), qui sont essentiellement parallèles entre eux, et de phases différentes et sont répartis, dans la section transversale du boîtier formant capot (1), en étant séparés les uns des autres et par rapport â la paroi du boîtier formant capot (1) par la distance maximale possible, et comportant un premier conducteur de dérivation (9), qui, à partir du premier des conducteurs formant barres omnibus (2), s'étend entre les second et troisième conducteurs formant barres omnibus (3,4), caractérisée par le fait que les second et troisième conducteurs formant barres omnibus (3,4) sont renflés au voisinage du premier conducteur de dérivation (9) de telle sorte qu'en cet endroit, dans la section transversale du boîtier formant capot (1), ils sont séparés du premier conducteur de dérivation (9) par une distance maximale, tout en conservant leur distance par rapport à la paroi cylindrique du boîtier formant capot (1).

2. Installation de commutation électrique suivant la revendication 1, dans laquelle le long du boîtier formant capot, de chaque côté du premier conducteur de dérivation, est disposé respectivement un autre conducteur de dérivation qui est associé aux second et troisième conducteurs formant barres omnibus, caractérisée par le fait que chacun des autres conducteurs de dérivation (10,11) est relié d'un seul tenant à une partie du conducteur respectif formant barre omnibus (3,4), auquel il est associé, pour former respectivement un composant, et que les composants ont un agencement identique et sont montés symétriquement par rapport au premier conducteur de dérivation (9).

3. Installation de commutation électrique suivant la revendication 1 ou 2, caractérisée par le fait que le premier conducteur de dérivation (9) est aplati en coupe transversale de telle sorte que respectivement les surfaces du premier conducteur de dérivation (9) possédant la courbure la plus faible sont tournées vers les second et troisième conducteurs formant barres omnibus (3,4).

4. Installation de commutation électrique suivant la revendication 1 ou l'une des suivantes, caractérisée par le fait que les conducteurs formant barres omnibus (2,3,4) sont aplatis aux emplacements au niveau desquels ils sont protégés par des supports isolants (5,6,7,8), sur le côté tourné vers ces derniers.

5. Installation de commutation électrique suivant la revendication 4, caractérisée par le fait que les supports isolants (5,6,7,8) possèdent, respectivement sur leur côté tourné vers le conducteur respectif formant barre omnibus (2,3,4), une électrode (20), qui complète la section transversale aplatie du conducteur formant barre omnibus (2,3,4) dans cette zone, essentiellement pour former un cercle.
